(19) Europäisches Patentamt / European Patent Office / Office européen des brevets

(11) **EP 3 396 831 B1**

(12) **EUROPEAN PATENT SPECIFICATION**

(45) Date of publication and mention of the grant of the patent:
**05.02.2020 Bulletin 2020/06**

(51) Int Cl.:
**H02M 1/12** *(2006.01)*  **H02M 1/42** *(2007.01)*
**H02M 1/44** *(2007.01)*  **H02M 1/00** *(2006.01)*

(21) Application number: **17168153.9**

(22) Date of filing: **26.04.2017**

(54) **PHASE COMPENSATION FOR POWER FACTOR CORRECTION CIRCUIT TO REDUCE ZERO-CROSSING DISTORTION**

PHASENKOMPENSATION FÜR LEISTUNGSFAKTORKORREKTURSCHALTKREIS ZUR REDUKTION DER VERZERRUNGEN IM NULLDURCHGANG

COMPENSATION DE PHASE POUR CIRCUIT DE CORRECTION DE FACTEUR DE PUISSANCE POUR RÉDUIRE LES DISTORSIONS PRÈS DES PASSAGES PAR ZÉRO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.10.2018 Bulletin 2018/44**

(73) Proprietor: **DELTA ELECTRONICS (THAILAND) PUBLIC COMPANY LIMITED**
**Samutprakam 10280 (TH)**

(72) Inventor: **Beinlich, Dominik Reinhard**
**10280 Tampol Phraksa, Amphur Muang, Samutprakarn (TH)**

(74) Representative: **2K Patentanwälte Blasberg Kewitz & Reichel**
**Partnerschaft mbB**
**Schumannstrasse 27**
**60325 Frankfurt am Main (DE)**

(56) References cited:
**US-A1- 2015 364 988**

- **WANFENG ZHANG ET AL: "A New Duty Cycle Control Strategy for Power Factor Correction and FPGA Implementation", IEEE TRANSACTIONS ON POWER ELECTRONICS, INSTITUTE OF ELECTRICAL AND ELECTRONICS ENGINEERS, USA, vol. 20, no. 6, 1 November 2006 (2006-11-01), pages 1745-1753, XP011150105, ISSN: 0885-8993**
- **FENG G ET AL: "A Digital Power Factor Correction (PFC) Control Strategy Optimized for DSP", IEEE TRANSACTIONS ON POWER ELECTRONICS, INSTITUTE OF ELECTRICAL AND ELECTRONICS ENGINEERS, USA, vol. 19, no. 6, 1 November 2004 (2004-11-01), pages 1474-1485, XP011121659, ISSN: 0885-8993, DOI: 10.1109/TPEL.2004.836619**
- **WANFENG ZHANG ET AL: "A new predictive control strategy for power factor correction", APEC 2003. 18TH. ANNUAL IEEE APPLIED POWER ELECTRONICS CONFERENCE AND EXPOSITION. MIAMI BEACH, FL, FEB. 9 - 13, 2003; [ANNUAL APPLIED POWER ELECTRONICS CONFERENCE], NEW YORK, NY : IEEE, US, 9 February 2003 (2003-02-09), pages 403-409 vol.1, XP032155931, DOI: 10.1109/APEC.2003.1179245 ISBN: 978-0-7803-7768-4**

## Description

## FIELD OF THE INVENTION

The present invention relates to a phase compensation method, and more particularly to a phase compensation method for a power factor correction circuit.

## BACKGROUND OF THE INVENTION

Generally, the load for a power converter has diversified forms. For example, the load includes a resistive impedance, an inductive impedance, a capacitive impedance, or a combination thereof. When the input current to the load and the input voltage to load are in phase, the power factor is close to 1. If the power factor is lower than 1, the transmitted power possibly loses because of phase mismatch between the current and the voltage or noise.

For advoiding the power factor reduction and increasing the power transmission efficiency, the conventional power converter has a power factor correction function. For example, the conventional power converter is usually equipped with an active type power factor correction circuit to achieve the power factor correction function. The power factor correction circuit is controlled in a feedforward control manner. That is, the power factor correction circuit samples the AC input voltage and adjusts the output current according to the AC input voltage. Consequently, the AC input current is changed with the AC input voltage. In such way, the AC input current with a nearly sine wave and identical phase is obtained. Consequently, the power factor is increased, and the total harmonic distortion is increased.

However, the conventional power factor correction circuit still has some drawbacks, For example, the conventional power factor correction circuit usually comprises a bridge rectifier diode and a high frequency filtering capacitor. Since the bridge rectifier diode has forward voltage drop and the high frequency filtering capacitor is located downstream of the bridge rectifier diode, the AC input current may cease and distort in the vicinity of the zero-crossing point of the AC output voltage. Under this circumstance, the zero-crossing distortion occurs. Consequently, the total harmonic distortion increases, and the power factor decreases.

Therefore, there is a need of providing an improved phase compensation method for a power factor correction circuit in order to overcome the above drawbacks.

FENG G ET AL: "A Digital Power Factor Correction (PFC) Control Strategy Optimized for DSP", IEEE TRANSACTIONS ON POWER ELECTRONICS, INSTITUTE OF ELECTRICAL AND ELECTRONICS ENGINEERS, USA, vol. 19, no. 6, 1 November 2004 (2004-11-01), pages 147 4-1485, XP011121659 discloses a predictive algorithm for digital control power factor correction (PFC). Based on this algorithm, all of the duty cycles required to achieve unity power factor in one half line period are calculated in advance by digital signal processors (DSPs). A Boost converter controlled by these precalculated duty cycles can achieve sinusoidal current waveform. Input voltage feed-forward compensation makes the output voltage insensitive to the input voltage variation and guarantees sinusoidal input current even if the input voltage is distorted. A differential controller predicting a present waveform of the input current corresponding to the present current value of the filtered sampled signal and a previous waveform of the input current corresponding to a previous current value of the filtered sampled signal and generating a current error signal by multiplying a difference between the present waveform and the previous waveform by the compensation factor is not disclosed. WANFENG ZHANG ET AL: "A new predictive control strategy for power factor correction",APEC 2003. 18TH. ANNUAL IEEE APPLIED POWER ELECTRONICS CONFERENCE AND EXPOSITION. MIAMI BEACH, FL, FEB. 9- 13, 2003; [ANNUAL APPLIED POWER ELECTRONICS CONFERENCE], NEW YORK, NY: IEEE, US, 9 February 2003 (2003-02-09), pages 403-409 vol.1, XP032155931, discloses a predictive control strategy for power factor correction (PFC), wherein all of the duty cycles required to achieve unity power factor in a half line period are generated in advance by using a predictive algorithm. Based on the average output voltage in the previous half line period, the duty cycles in the current half line period are calculated by the predictive algorithm, which is derived from the differential equations of Boost topology. An optimization process is incorporated with the predictive algorithm to fine tune the parameter of model for the purpose of further reducing the harmonic current. A differential controller predicting a present waveform of the input current corresponding to the present current value of the filtered sampled signal and a previous waveform of the input current corresponding to a previous current value of the filtered sampled signal and generating a current error signal by multiplying a difference between the present waveform and the previous waveform by the compensation factor is not disclosed.

WANFENG ZHANG ET AL: "A New Duty Cycle Control Strategy for Power Factor Correction and FPGA Implementation", IEEE TRANSACTIONS ON POWER ELECTRONICS, INSTITUTE OF ELECTRICAL AND ELECTRONICS ENGINEERS, USA, vol. 20, no. 6, 1 November 2006 (2006-11-01), pages 1745-1753, XP011150105, discloses a duty cycle control strategy for boost power factor correction (PFC). The duty cycle is determined based on the input voltage, reference output voltage, inductor current, and reference current. The duty cycle determination algorithm includes two terms, the current term and the voltage term, which can be calculated in parallel and requires only one multiplication and three additions (subtractions) operations in digital implementation. A differential controller predicting a present waveform of the input current corresponding to the present current value of the filtered sampled signal and a previous waveform of the input current corresponding to a previous current value of the filtered sampled signal and generating a current error signal by multiplying a difference between the present waveform and the previous waveform by the compensation factor is not disclosed.

## SUMMARY OF THE INVENTION

It is an object of the present invention to provide an enhanced phase compensation method for a power factor correction circuit in order to effectively suppress the zero-crossing distortion, decrease the total harmonic distortion and increase the power factor.

This problem is solved by a method for phase compensating a power factor correction circuit as claimed by claim 1. Further advantageous embodiments are the subject-matter of the dependent claims.

The above contents of the present invention will become more readily apparent to those ordinarily skilled in the art after reviewing the following detailed description and accompanying drawings, in which:

## BRIEF DESCRIPTION OF THE DRAWINGS

FIG. 1 is a schematic circuit diagram illustrating the architecture of a power factor correction circuit according to an embodiment of the present invention;
FIG. 2 schematically illustrating the operating principle of the control unit of the power factor correction circuit of FIG. 1;
FIG. 3 is a flowchart illustrating a phase compensation method for the power factor correction circuit of FIG. 1;
FIG. 4 is a schematic timing waveform diagram illustrating the input current processed by the conventional power factor correction circuit; and
FIG. 5 is a schematic timing waveform diagram illustrating the input current processed by the power factor correction circuit and the phase compensation method of the present invention.

## DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

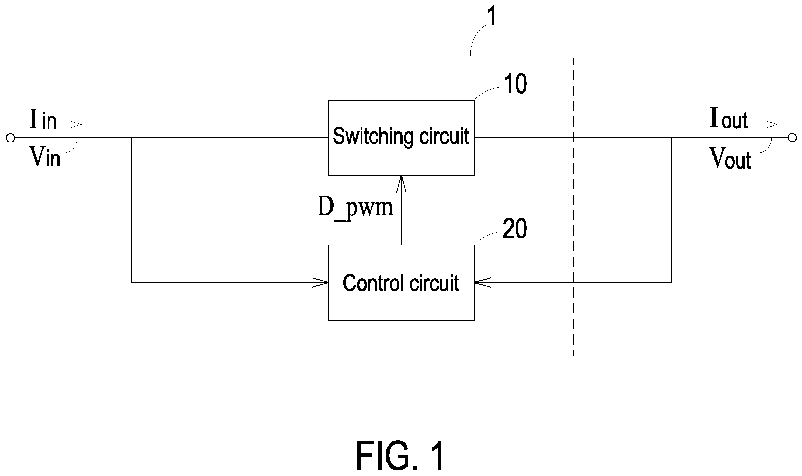

FIG. 1 is a schematic circuit diagram illustrating the architecture of a power factor correction circuit according to an embodiment of the present invention. The power factor correction circuit 1 can be applied to a power converter (not shown) in order to increase the power factor of the power converter. The power factor correction circuit 1 receives an input current Iin and an input voltage Vin and generates an output current Iout and an output voltage Vout. The power factor correction circuit 1 comprises a switching circuit 10 and a control circuit 20. By alternately turning on or turning off the switching circuit 10, the power factor correction circuit 1 generates the output current Iout and the output voltage Vout. The control unit 20 generates a pulse width modulation signal D_pwm according to the input current Iin, the input voltage Vin and the output voltage Vout. The switching circuit 10 is controlled by the control unit 20 according to the pulse width modulation signal D_pwm. Consequently, the phase of the input current Iin and the phase of the input voltage Vin are adjusted to be identical. In addition, the zero-crossing distortion can be suppressed.

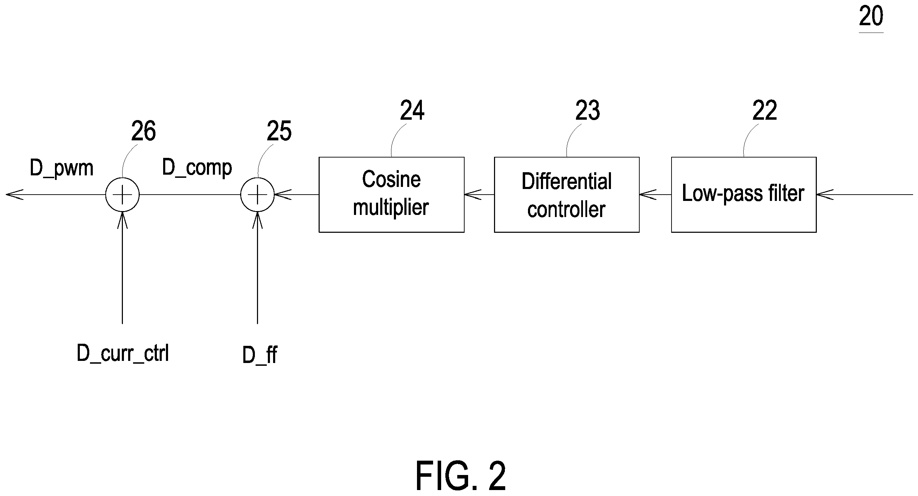

FIG. 2 schematically illustrating the operating principle of the control unit of the power factor correction circuit of FIG. 1. The control unit 20 comprises a low-pass filter 22, a differential controller 23, a cosine multiplier 24, a first adder 25 and a second adder 26.

The low-pass filter 22 continuously receives a sampled signal that reflects a present current value of the input current In. Moreover, the low-pass filter 22 filters the sampled signal.

The differential controller 23 is electrically connected to the low-pass filter 22 to receive the filtered sampled signal from the low pass filters 22. Moreover, the differential controller 23 has a register for temporarily storing the filtered sampled signal. Whenever a new filtered sampled signal from the low-pass filter 22 is received, the old filtered sampled signal in the register is replaced with the new filtered sampled signal. Before the old filtered sampled signal in the register is replaced with the new filtered sampled signal, the differential controller 23 predicts the waveform of the input current Iin corresponding to the new filtered sampled signal, and the differential controller 23 predicts the waveform of the input current corresponding to the old filtered sampled signal. Moreover, the differential controller 23 compares the waveform of the predicted new input current Iin with the waveform of the predicted old input current. According to the difference between the waveform of the predicted new input current Iin and the waveform of the predicted old input current, the differential controller 23 generates a current error signal.

If no signal has been stored in the register, the current error signal outputted from the differential controller 23 is zero. When the power factor correction circuit 1 is in a non-usage status, no signal is stored in the register of the differential controller 23. After the power factor correction circuit 1 is enabled and the differential controller 23 receives the filtered sampled signal for the first time, no signal is stored in the register and thus the current error signal is zero. Then, the filtered sampled signal is received by the differential controller 23 and stored in the register. When the differential controller 23 receives the filtered sampled signal for the second time, the differential controller 23 predicts the waveform of the new input current Iin corresponding to the new filtered sampled signal (i.e., the signal received for the second time), and the differential controller 23 predicts the waveform of the input current corresponding to the old filtered sampled signal (i.e., the signal received for the first time). According to the difference between these two waveforms, the differential controller 23 generates the current error signal. Then, the new filtered sampled signal (i.e., the signal received for the second time) is stored in the register. Consequently, the old filtered sampled signal in the register is replaced with the new filtered sampled signal.

That is, the differential controller 23 predicts the waveform of the input current Iin corresponding to the present filtered sampled signal, and the differential controller 23 predicts the waveform of the input current Iin corresponding to the previous filtered sampled signal. According to the difference between these two waveforms, the differential controller 23 generates the current error signal. Then, the present filtered sampled signal is stored in the register.

In an embodiment, the differential controller 23 has a compensation factor, which is a constant. After the waveform of the input current Iin corresponding to the present filtered sampled signal is compared with the waveform of the input current Iin corresponding to the previous filtered sampled signal, the comparing result is multiplied by the compensation factor. Consequently, the current error signal is acquired. The compensation factor is a positive value or a negative value. Moreover, the compensation factor is preset according to the phase difference between the input current Iin and the input voltage Vin.

The cosine multiplier 24 is electrically connected with the differential controller 23 to receive the current error signal. After the current error signal is adjusted by the cosine multiplier 24, an adjusted signal is generated. Since the current error signal is adjusted by the cosine multiplier 24, the waveform change of the current error signal at the peak value is reduced and the waveform change of the current error signal at the zero is increased.

The first adder 25 is electrically connected with the cosine multiplier 24. The first adder 25 adds a feedforward signal D_ff to the adjusted signal from the cosine multiplier 24, and generates a phase compensation signal D_comp. Due to the feedforward signal D_ff, the output current Iout can be adjusted according to the input voltage Vin. Consequently, the phase of the input current Iin and the phase of the input voltage Vin are adjusted to be identical. In an embodiment, the feedforward signal D_ff is determined according to the input voltage Vin and the output voltage Vout. The relationships between the feedforward signal D_ff, the input voltage Vin and the output voltage Vout are expressed by the following mathematic formula (1):

$$D\_ff = 1 - (Vin/Vout) \qquad (1)$$

If the current error signal outputted from the differential controller 23 is zero, the adjusted signal from the cosine multiplier 24 is also zero. Under this circumstance, the phase compensation signal D_comp is equal to the feedforward signal D_ff. If the current error signal outputted from the differential controller 23 is not zero, the signal received by the first adder 25 contains the adjusted signal from the cosine multiplier 24 and the feedforward signal D_ff. Under this circumstance, the phase compensation signal D_comp is equal to the sum of the adjusted signal and the feedforward signal D_ff.

The second adder 26 is electrically connected with the first adder 25. The second adder 26 adds a current control signal D_curr_ctrl to the phase compensation signal D_comp, and generates the pulse width modulation signal D_pwm. The current control signal D_curr_ctrl is generated according to a result of comparing a current feedback value with a preset current. The current control signal D_curr_ctrl is used to adjust the output current Iout to be the preset current.

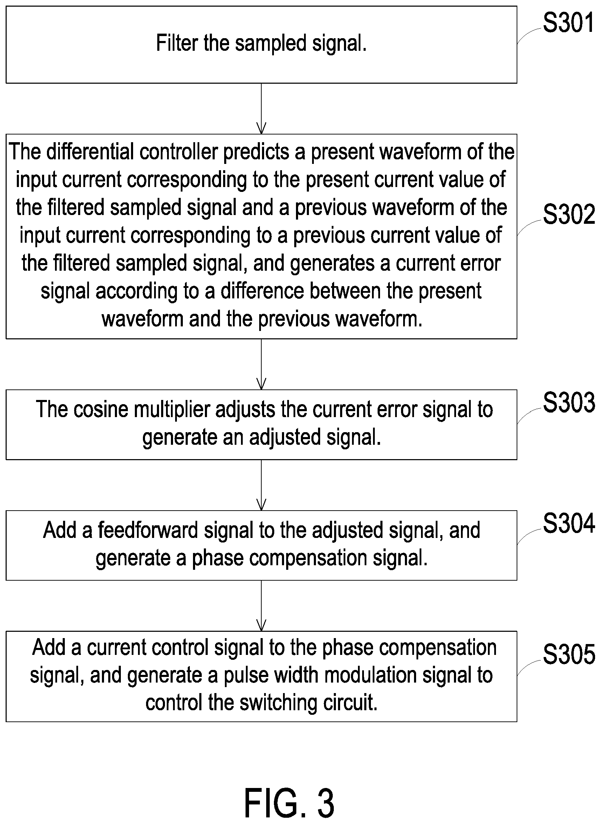

FIG. 3 is a flowchart illustrating a phase compensation method for the power factor correction circuit of FIG. 1. Please refer to FIGS. 1, 2 and 3. The phase compensation method comprises the following steps.

Firstly, a sampled signal is generated by sampling a present current value of the input signal Vin, and the low-pass filter 22 filters the sampled signal (Step S301).

Then, the differential controller 23 predicts a present waveform of the input current Iin corresponding to the present current value of the filtered sampled signal and a previous waveform of the input current Iin corresponding to a previous current value of the filtered sampled signal, compares the present waveform with the previous waveform, and generates a current error signal according to the comparing result (Step S302).

Then, the first adder 25 adds a feedforward signal D_ff and the adjusted signal, and generates a phase compensation signal D_comp, wherein the feedforward signal D ff is determined according to the input voltage Vin and the output voltage Vout (Step S304).

Then, the second adder 26 adds a current control signal D_curr_ctrl to the phase compensation signal D_comp, and generates a pulse width modulation signal D_pwm to control the switching circuit 10 to adjust the phase of the output current Iout (Step S305). The current control signal D_curr_ctrl is generated according to a result of comparing a current feedback value with a preset current.

In the step S305, the phase of the output current Iou is adjusted according to the pulse width modulation signal D_pwm. Consequently, the phase of the input voltage Vin is correspondingly adjusted. Since the phase of the input current and the phase of the output current are identical, the phase of the input current Iin is correspondingly changed with the adjustment of the output current Iout. In such way, the phase of the input current Iin is adjusted to be identical to the phase of the input voltage Vin.

In accordance with the feature of the present invention, the low-pass filter 22, the differential controller 23 and the cosine multiplier 24 are employed to perform the steps S301, S302 and S303. Consequently, the zero-crossing distortion is effectively suppressed, the total harmonic distortion is decreased, and the power transmission efficiency is enhanced.

In the step S302, the differential controller 23 receives the filtered sampled signal for the first time after the power factor correction circuit 1 is first turned on. Meanwhile, the current error signal is zero, and thus the phase compensation signal D_comp is equal to the feedforward signal D_ff in the step S304. In addition, the pulse width modulation signal D_pwm generated according to the current control signal D_curr_ctrl and the phase compensation signal D_comp is used to control the switching circuit 10 only. Consequently, the phase of the input current Iin is adjusted to be identical to the phase of the input voltage Vin.

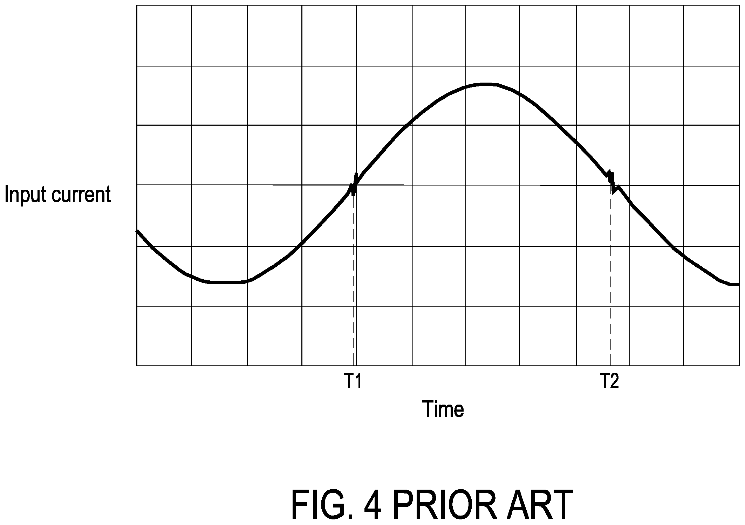

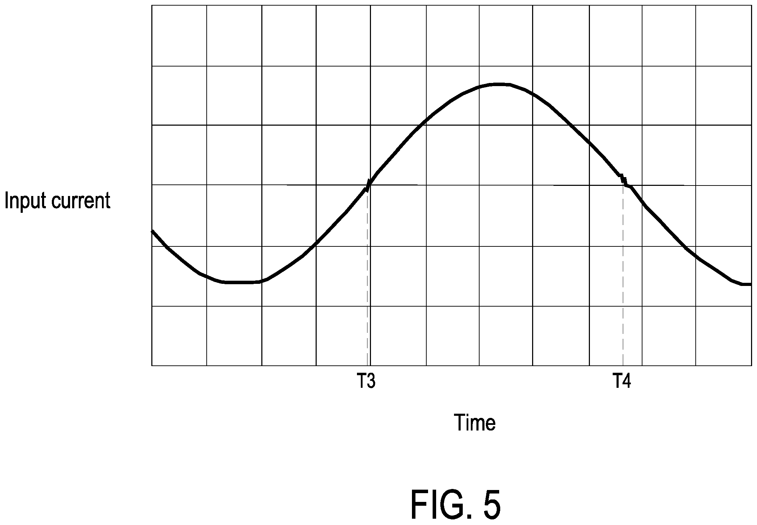

FIG. 4 is a schematic timing waveform diagram illustrating the input current processed by the conventional power factor correction circuit. FIG. 5 is a schematic timing waveform diagram illustrating the input current processed by the power factor correction circuit and the phase compensation method of the present invention.

Please refer to FIG. 4. As previously described, the conventional power factor correction circuit usually comprises a bridge rectifier diode and a high frequency filtering capacitor. Since the bridge rectifier diode has forward voltage drop and the high frequency filtering capacitor is located downstream of the bridge rectifier diode, the AC input current may cease and distort in the vicinity of the zero-crossing point of the AC output voltage (e.g. at the time points T1 and T2). Under this circumstance, the zero-crossing distortion occurs, and the total harmonic distortion increases.

Please refer to FIG. 5. By the power factor correction circuit and the phase compensation method of the present invention, the distortion of the AC input current in the vicinity of the zero-crossing point of the AC output voltage (e.g. at the time points T3 and T4) is largely decreased. When compared with the conventional technology, the power factor correction circuit and the phase compensation method of the present invention are capable of effectively suppressing the zero-crossing distortion, decreasing the total harmonic distortion and enhancing the power transmission efficiency.

From the above descriptions, the present invention provides a phase compensation method for a power factor correction circuit. Firstly, the sampled signal is filtered. Then, the differential controller predicts a present waveform of the input current corresponding to the present current value of the filtered sampled signal and a previous waveform of the input current corresponding to a previous current value of the filtered sampled signal, and generates a current error signal according to a difference between the present waveform and the previous waveform. Then, the cosine multiplier adjusts the current error signal to generate an adjusted signal. Then, a feedforward signal is added to the adjusted signal, so that a phase compensation signal is generated. Afterwards, a current control signal is added to the phase compensation signal, so that a pulse width modulation signal is generated to control the switching circuit. By the phase compensation method, the phase of the input current and the phase of the input voltage are adjusted to be identical. Moreover, the zero - crossing distortion is effectively suppressed, the total harmonic distortion is decreased, and the power transmission efficiency is enhanced. Moreover, the current error signal is adjusted by the cosine multiplier, the waveform change of the current error signal at the peak value is reduced and the waveform change of the current error signal at the zero is increased. In other words, the stability of the power factor correction circuit of the present invention is enhanced.

**Claims**

1. A method for phase compensating a power factor correction circuit (1), the power factor correction circuit (1) comprising a switching circuit (10) and a control unit (20) and receiving an input voltage (Vin) and an input current (Iin), the switching circuit (10) being alternately turned on or turned off to generate an output voltage (Vout) and an output current (Iout) under control of the control unit (20), the control unit (20) comprising a low-pass filter (22), a differential controller (23) and a cosine multiplier (24), the low-pass filter (22) continuously receiving a sampled signal that reflects a present current value of the input current (Iin), the differential controller (23) storing a compensation factor, the method comprising steps of:

(a) the low-pass filter (22) filtering the sampled signal;
(b) the differential controller (23) predicting a present waveform of the input current (Iin) corresponding to the present current value of the filtered sampled signal and a previous waveform of the input current (Iin) corresponding to a previous current value of the filtered sampled signal and generating a current error signal by multiplying a difference between the present waveform and the previous waveform by the compensation factor;
(c) the cosine multiplier (24) adjusting the current error signal, thereby generating an adjusted signal;
(d) adding a feedforward signal (D_ff) to the adjusted signal, thereby generating a phase compensation signal (D_comp); and

(e) generating a current control signal (D_curr_ctrl) according to a result of comparing a current feedback value with a preset current and adding the current control signal (D_curr_ctrl) to the phase compensation signal (D_comp), thereby generating a pulse width modulation signal (D_pwm) to control the switching circuit (10).

2. The method according to claim 1, wherein the differential controller (23) further comprises a register, and the filtered sampled signal is stored in the register.

3. The method according to claim 1 or 2, wherein in the step (d), the feedforward signal (D_ff) is determined according to the input voltage (Vin) and the output voltage (Vout).

4. The method according to claim 3, wherein the feedforward signal (D_ff) is equal to 1 - (Vin/Vout), wherein Vin is the input voltage (Vin), and Vout is the output voltage (Vout).

5. The method according to any of the preceding claims, wherein the compensation factor is a positive value or a negative value.

6. The method according to any of the preceding claims, wherein the compensation factor is preset according to a phase difference between the input current (Iin) and the input voltage (Vout).

**Patentansprüche**

1. Verfahren zur Phasenkompensation einer Leistungsfaktorkorrekturschaltung (1), wobei die Leistungsfaktorkorrekturschaltung (1) einen Schaltkreis (10) und eine Steuereinheit (20) umfasst und eine Eingangsspannung (Vin) und einen Eingangsstrom (Iin) empfängt, wobei der Schaltkreis (10) abwechselnd ein- oder ausgeschaltet wird, um eine Ausgangsspannung (Vout) und einen Ausgangsstrom (Iout) unter Steuerung der Steuereinheit (20) zu erzeugen, wobei die Steuereinheit (20) einen Tiefpassfilter (22), eine Differenzregelung (23) und einen Cosinus-Multiplizierer (24) umfasst, wobei der Tiefpassfilter (22) ein Abtastsignal kontinuierlich empfängt, das einem aktuellen Stromwert des Eingangsstroms (Iin) entspricht, wobei die Differenzregelung (23) einen Kompensationsfaktor speichert, wobei das Verfahren die folgenden Schritte umfasst:

(a) der Tiefpassfilter (22) filtert das Abtastsignal;
(b) die Differenzregelung (23) sagt eine aktuelle Signalform des Eingangsstroms (Iin) entsprechend dem aktuellen Stromwert des gefilterten Abtastsignals und eine vorherige Signalform des Eingangsstroms (Iin) entsprechend einem früheren Stromwert des gefilterten Abtastsignals vorher und erzeugt ein aktuelles Fehlersignal erzeugt, indem eine Differenz zwischen der aktuellen Signalform und der vorherigen Signalform mit dem Kompensationsfaktor multipliziert wird;
(c) der Cosinus-Multiplizierer (24) stellt das aktuelle Fehlersignal ein, um ein angepasstes Signal zu erzeugen;
(d) ein Vorwärtsregelungs-Signal (D_ff) wird zu dem eingestellten Signal addiert, um so ein Phasenkompensationssignal (D_comp) zu erzeugen; und
(e) ein aktuelles Steuersignal (D_curr_ctrl) wird gemäß einem Ergebnis eines Vergleichs eines aktuellen Rückkopplungswertes mit einem voreingestellten Strom erzeugt und das aktuelle Steuersignal (D_curr_ctrl) wird zu dem Phasenkompensationssignal (D_comp) addiert, um so ein Pulsweitenmodulationssignal (D_pwm) zum Steuern des Schaltkreises (10) zu erzeugen.

2. Verfahren nach Anspruch 1, wobei die Differenzregelung (23) weiterhin ein Register umfasst und das gefilterte Abtastsignal in dem Register gespeichert wird.

3. Verfahren nach Anspruch 1 oder 2, wobei in dem Schritt (d) das Vorwärtsregelungs-Signal (D_ff) entsprechend der Eingangsspannung (Vin) und der Ausgangsspannung (Vout) bestimmt wird.

4. Verfahren nach Anspruch 3, wobei das Vorwärtsregelungs-Signal (D_ff) gleich 1 - (Vin/Vout) ist, wobei Vin die Eingangsspannung (Vin) und Vout die Ausgangsspannung (Vout) ist.

5. Verfahren nach einem der vorhergehenden Ansprüche, wobei der Kompensationsfaktor ein positiver Wert oder ein negativer Wert ist.

6. Verfahren nach einem der vorhergehenden Ansprüche, wobei der Kompensationsfaktor gemäß einer Phasendifferenz zwischen dem Eingangsstrom (Iin) und der Eingangsspannung (Vout) voreingestellt ist.

**Revendications**

1. Un procédé de compensation de phase d'un circuit de correction de facteur de puissance (1), le circuit de correction de facteur de puissance (1) comprenant un circuit de commutation (10) et une unité de commande (20) et recevant une tension d'entrée (Vin) et un courant d'entrée (Iin), le circuit de com-

mutation (10) étant alternativement activé ou désactivé pour générer une tension de sortie (Vout) et un courant de sortie (lout) sous la commande de l'unité de commande (20), l'unité de commande (20) comprenant un filtre passe-bas (22), un contrôleur différentiel (23) et un multiplicateur cosinus (24), le filtre passe-bas (22) recevant en continu un signal échantillonné qui reflète une valeur actuelle du courant d'entrée (lin), le contrôleur différentiel (23) stockant un facteur de compensation, le procédé comprenant les étapes :

    (a) le filtre passe-bas (22) filtrant le signal échantillonné ;

    (b) le contrôleur différentiel (23) prédisant une forme d'onde actuelle du courant d'entrée (lin) correspondant à la valeur de courant actuelle du signal échantillonné filtré et une forme d'onde précédente du courant d'entrée (lin) correspondant à une valeur de courant précédente du signal échantillonné filtré et générant un signal d'erreur actuel en multipliant une différence entre la forme d'onde actuelle et la forme d'onde précédente du facteur de compensation ;

    (c) le multiplicateur de cosinus (24) ajustant le signal d'erreur actuel, générant ainsi un signal ajusté ;

    (d) l'ajout d'un signal à action directe (D_ff) au signal ajusté, générant ainsi un signal de compensation de phase (D_comp) ; et

    (e) la génération d'un signal de commande de courant (D_curr_ctrl) en fonction d'un résultat de la comparaison d'une valeur de rétroaction courante avec un courant prédéfini, et l'ajout du signal de commande de courant (D_curr_ctrl) au signal de compensation de phase (D_comp), générant ainsi un signal de modulation de largeur d'impulsion (D_pwm) pour commander le circuit de commutation (10).

**2.** Le procédé selon la revendication 1, dans lequel le contrôleur différentiel (23) comprend en outre un registre, et le signal échantillonné filtré est stocké dans le registre.

**3.** Le procédé selon la revendication 1 ou 2, dans lequel, à l'étape (d), le signal à action directe (D_ff) est déterminé en fonction de la tension d'entrée (Vin) et de la tension de sortie (Vout).

**4.** Le procédé selon la revendication 3, dans lequel le signal à action directe (D_ff) est égal à 1 - (Vin / Vout), dans lequel Vin est la tension d'entrée (Vin) et Vout est la tension de sortie (Vout).

**5.** Le procédé selon l'une quelconque des revendications précédentes, dans lequel le facteur de compensation est une valeur positive ou une valeur négative.

**6.** Le procédé selon l'une quelconque des revendications précédentes, dans lequel le facteur de compensation est préréglé en fonction d'une différence de phase entre le courant d'entrée (lin) et la tension d'entrée (Vout).

FIG. 1

EP 3 396 831 B1

20

D_pwm ← ⊕ ← D_comp ← ⊕ ← | Cosine multiplier | ← | Differential controller | ← | Low-pass filter | ←
         26              25         24                    23                        22

D_curr_ctrl        D_ff

FIG. 2

Filter the sampled signal.　　　　　　　S301

The differential controller predicts a present waveform of the input current corresponding to the present current value of the filtered sampled signal and a previous waveform of the input current corresponding to a previous current value of the filtered sampled signal, and generates a current error signal according to a difference between the present waveform and the previous waveform.　　S302

The cosine multiplier adjusts the current error signal to generate an adjusted signal.　　S303

Add a feedforward signal to the adjusted signal, and generate a phase compensation signal.　　S304

Add a current control signal to the phase compensation signal, and generate a pulse width modulation signal to control the switching circuit.　　S305

# FIG. 3

FIG. 4 PRIOR ART

FIG. 5

Time

Input current

T4

T3

EP 3 396 831 B1

12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A Digital Power Factor Correction (PFC) Control Strategy Optimized for DSP. **FENG G et al.** IEEE TRANSACTIONS ON POWER ELECTRONICS. INSTITUTE OF ELECTRICAL AND ELECTRONICS ENGINEERS, 01 November 2004, vol. 19, 1474-1485
- A new predictive control strategy for power factor correction. **WANFENG ZHANG et al.** APEC 2003. 18TH. ANNUAL IEEE APPLIED POWER ELECTRONICS CONFERENCE AND EXPOSITION. MIAMI BEACH, FL, FEB. 9- 13, 2003; [ANNUAL APPLIED POWER ELECTRONICS CONFERENCE. IEEE, 09 February 2003, vol. 1, 403-409

- A New Duty Cycle Control Strategy for Power Factor Correction and FPGA Implementation. **WANFENG ZHANG et al.** IEEE TRANSACTIONS ON POWER ELECTRONICS. INSTITUTE OF ELECTRICAL AND ELECTRONICS ENGINEERS, 01 November 2006, vol. 20, 1745-1753